Europäisches Patentamt

European Patent Office

Office européen des brevets

(19)

(11) Publication number: **0 027 921**
**B2**

# NEW EUROPEAN PATENT SPECIFICATION

(12)

(45) Date of publication of the new patent specification:
18.10.89

(51) Int. Cl.⁴: **C 08 F 20/44**

(21) Application number: **80105983.3**

(22) Date of filing: **03.10.80**

(54) Process for preparing an acrylonitrile polymer.

(30) Priority: **29.10.79 US 89057**

(43) Date of publication of application:
**06.05.81 Bulletin 81/18**

(45) Publication of the grant of the patent:
**16.05.84 Bulletin 84/20**

(45) Mention of the opposition decision:
**18.10.89 Bulletin 89/42**

(84) Designated Contracting States:
**AT BE CH DE FR GB IT LI NL SE**

(56) References cited:
**DE-B- 1 300 678**
**DE-B- 1 300 678**
**DE-B- 2 400 043**
**GB-A- 948 975**
**US-A- 2 456 360**
**US-A- 2 847 405**
**US-A- 2 974 123**
**US-A- 3 025 278**

**C.E. Schildknecht. "POLYMER PROCESSES",**
**Interscience Publishers, 1956, p. 147 ff.**

(73) Proprietor: **AMERICAN CYANAMID COMPANY,**
**1937 West Main Street P.O. Box 60, Stamford**
**Connecticut 06904-0060 (US)**

(72) Inventor: **Kourtz, Raymond E., 4725 Howe Avenue,**
**Pensacola Florida 32504 (US)**
Inventor: **Daftary, Shashikumar H., 8221 Squire Road,**
**Pensacola Florida 32504 (US)**

(74) Representative: **Diehl, Hermann O., Dr. et al, Diehl &**
**Kressin Flüggenstrasse 17, D-8000 München 19 (DE)**

**Description**

This invention relates to a process for preparing an acrylonitrile polymer having a limited range of intrinsic viscosity and a consistent level of sulfonic acid end groups throughout said intrinsic viscosity range. Such a polymer is useful in the spinning of acrylonitrile polymer fiber having a consistent level of dyesites furnished by sulfonic acid end groups derived from a bisulfite compound used as a redox catalyst component during polymerization, the dyesite level being the same at the various levels of intrinsic viscosity contemplated.

In the spinning of acrylonitrile polymer fiber, it is desirable to employ as the fiber-forming polymer an acrylonitrile polymer having dyesites incorporated in the polymer structure. A particularly desirable procedure for introducing such dyesites in the polymer structure is to conduct polymerization by means of a redox catalyst system in which a bisulfite compound is used as reducing component. In this manner, chain ends of the polymer will contain sulfonic acid groups derived from the bisulfite compound employed in the redox system. However, in this polymerization procedure, molecular weight as indicated by intrinsic viscosity, is also controlled by the redox system employed. Lower molecular weight polymers are obtained from increased use of redox system with the result that more sulfonic acid groups are introduced as end group components in the lower molecular weight polymers.

When these sulfonic acid end groups are used as the dyesites in fiber prepared from the acrylonitrile polymer only a certain number are required to provide the desired range of dyeability for textile applications. This range is about 0.2 to 0.35 weight percent of sulfonic acid end groups based on the weight of the polymer. Lower contents of sulfonic acid end groups do not provide an adequate range of dyeability for textile uses. Higher contents of sulfonic acid end groups are not necessary for the full range of dyeability desired for textile purposes and can cause very rapid uptake of dye from the dyebath with the result that level dyeings are not achieved.

In U.S. Patent 2,974,123, issued March 7, 1961 to Ketterer (du Pont), it is disclosed that color-stable acrylonitrile polymers of intrinsic viscosity in the range of 1.30 to 2.20 can be obtained by polymerizing the monomer content in aqueous medium in proportions as follows:

| | |
|---|---|
| Percent total monomers | 18.5 to 35 |
| P.p.m. ionic iron | 0.2 to 5 |
| Percent[1] beta-mercaptoethanol | 0.05 to 0.3 |
| Percent[1] activator as sodium metabisulfite[2] | 0.2 to 3.8 |
| Percent[1] catalyst as potassium persulfate | 0.2 to 0.7 |
| Temperature (°C) | 45 to 60 |
| Residence time (min) | 30 to 110 |
| Water to balance acidified with sulfuric acid to pH of | 1.8 to 3.75 |

[1] Based on monomers.
[2] Stoichiometric equivalent amounts of $SO_2$ may be substituted for sodium meta-bisulfite. If $SO_2$ is used, no acid necessary for lowering pH.

The reference teaches use of monomers containing sulfonic acid groups and both high and low levels of activator to catalyst. There is no teaching that the content of sulfonic acid end group derived from the bisulfite activator can be maintained constant while varying the intrinsic viscosity of the polymer.

Accordingly, there exists the need for a process for polymerizing an acrylonitrile polymer free of comonomers containing acid dyesite groups in the presence of a redox catalyst system employing a bisulfite as the reducing agent whereby the content of end groups derived from the bisulfite is controlled while the intrinsic viscosity of the polymer can be varied independently. The provision for such a process and polymer would fulfill a long-felt need and constitute a significant advance.

In accordance with the present invention, there is provided a process for preparing an acrylonitrile polymer which comprises forming, at a temperature in the range of 40°C to 80°C, an aqueous suspension comprising a monomer content of at least 85 weight percent acrylonitrile, the balance being one or more ethylenically unsaturated monomers free of acid dyesite groups, said monomer content forming from 25 to 40 percent based on the weight of said suspension, initiating polymerization by adding to said suspension effective amounts of a redox system comprising 4–20 parts per 1000 parts of monomer, of an oxidizing agent selected from the group consisting of potassium persulphate, potassium chlorate, potassium perchlorate and potassium peroxide, their corresponding sodium and ammonium salts and hydrogen peroxide and a reducing agent, and a copper activator, said reducing agent comprising a mixture of a bisulfite and 0.4–0.8 percent by weight, based on monomers, of a water-soluble mercapto compound, the relative proportions of said bisulfite and said mercapto compound being such as to provide a sulfonic acid end group content in the resulting polymer in the range of 0.2 to 0.35 weight percent, based on the weight of polymer, and to provide a polymer having an intrinsic viscosity measured in dimethyl formamide at 40°C in the range of 0.5 to 1.4, terminating said reaction at a monomer conversion in the range of 75% to 90%, and recovering the polymer thus produced.

The process of the present invention enables acrylonitrile polymers free of comonomers containing acid dyesite groups to be prepared within the range of intrinsic viscosities specified at consistent levels of sulfonic acid end group content as desired. Any specific content of sulfonic acid end groups within the range specified can be obtained in the acrylonitrile polymer at any intrinsic viscosity value within the range stated. This enables these rather low molecular weight acrylonitrile polymers (as indicated by intrinsic viscosity) to be prepared at desirable levels of dyesites (sulfonic acid end groups) instead of the excessive levels previously obtained. As a result, fiber prepared from the polymers of the invention have desirable dyeing characteristics without the rapid dye uptake associated with high dyesite contents.

An important feature of the present invention is that it enables intrinsic viscosity of the resulting polymer to be controlled independently of the content of sulfonic acid end groups therein.

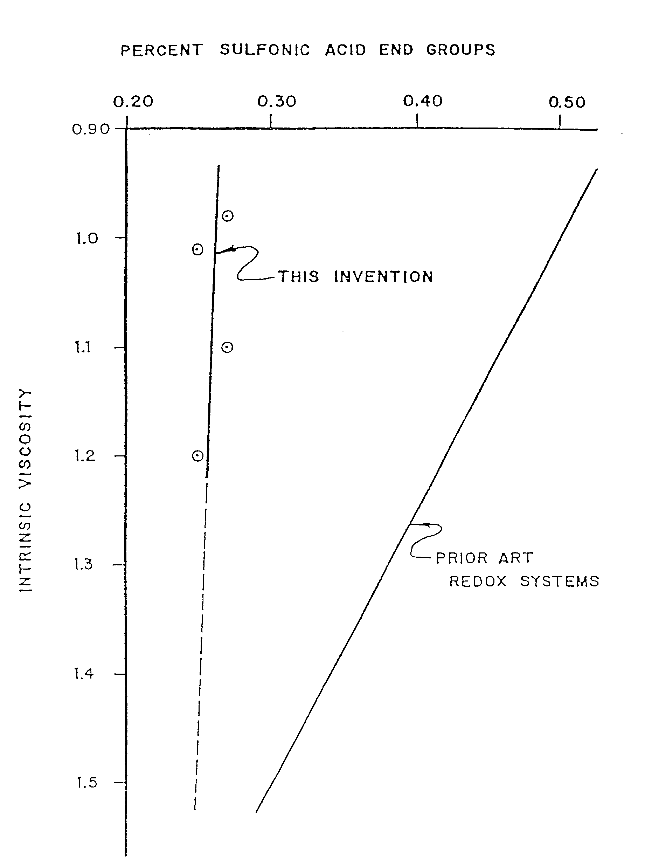

The sole figure of drawing shows the relationship between sulfonic acid end groups and intrinsic viscosity of the polymer for polymers produced in accordance with the present invention and those produced in accordance with those of the prior art.

In carrying out the process of the present invention, continuous suspension polymerization may be employed. As indicated, the content of acrylonitrile in the polymer will be at least 85 weight percent with any balance comprising one or more monomers free of acid dyesite groups. Comonomers suitable for use in the present invention include, for example, methyl acrylate, ethyl acrylate, butyl acrylate, methoxymethyl acrylate, beta-chloroethyl acrylate, and the corresponding esters of methacrylic acid and chloroacrylic acid, vinyl chloride, vinyl fluoride, vinyl bromide, vinylidene chloride, vinylidene bromide, allyl chloride, 1-chloro-1-bromoethylene, methacrylonitrile, methyl vinyl ketone, vinyl formate, vinyl acetate, vinyl propionate, vinyl stearate, vinyl benzoate, N-vinyl-carbazole, vinyl furan, alkyl vinyl ethers, dimethyl citraconate, diethylmesaconate, styrene, dibromostyrene, vinyl naphthalene, 2-methyl-1- vinylimidazole, 4-methyl-1-vinylimidazole, 5-methyl-1-vinylimidazole, acrylamide, methacrylamide, dimethyl-acrylamide, isopropyl acrylamide, allyl alcohol, 2-vinylpyridine, 4-vinylpyridine, 2-methylvinylpyridine, vinylpyrrolidone, vinylpiperidone, 1,2-dihydroxypropyl, methacrylate, hydroxyethyl methacrylate, 1-trimethylammonium-2-hydroxypropyl methacrylate methosulfate.

The monomer content should comprise about 25 to 40 weight percent of the aqueous reaction mixture. The reaction mixture is catalyzed with a suitable quantity of redox catalyst system to provide the desired molecular weight value and sulfonic acid end groups. Suitable oxidizing agents for the redox catalyst system include, for example, potassium persulfate, potassium chlorate, potassium perchlorate, potassium peroxide as well as the corresponding sodium and ammonium salts and hydrogen peroxide.

The reducing component of the useful redox system is a mixture of two components, a bisulfite and a mercapto compound such as mercaptoethanol. The bisulfite may be potassium, sodium, or ammonium bisulfite or the corresponding metabisulfite in an amount which is sufficient to provide from 0.2 to 0.35, preferably 0.25 to 0.30 weight percent sulfonic acid end groups. A mercapto compound is employed in amounts necessary to complete the polymerization reaction and will be in the range of 0.4 to 0.8 weight percent based on the weight of monomers.

As metal activator, it is desirable to employ copper sulfate pentahydrate. This compound has advantage in that it does not discolor the polymer or fiber prepared therefrom to the same extent as does iron.

The redox system is used in amounts of 4 to 20 parts of oxidizing component per 1000 parts of monomer content of the aqueous reaction mixture and the amount of reducing agent will be consistent with amount of oxidizing component employed.

The reaction mixture is heated to a temperature of 40 to 80 °C and the reaction is initiated by addition of the redox system as described. The reaction is allowed to continue until a conversion in the range of 75 to 90% is obtained. The degree of conversion is readily determined by analysis. The reaction is terminated by destroying the reducing agents by addition of a suitable shortstop agent to the reaction mixture. After the reaction is terminated as indicated, the polymer is recovered from the reaction mixture and unreacted monomer is distilled from the reaction medium.

The invention is more fully illustrated in the examples which follow wherein all parts and percentages are by weight unless otherwise specified. In the examples intrinsic viscosity is given. This value is measured in dimethyl formamide at 40 °C.

Comparative Example A

To a well-agitated suitable cylindrical vessel there were added a monomer content of 0.2% methyl methacrylate and 90.8% acrylonitrile with water and various additives to produce the composition shown in the following table which also gives the reaction conditions and other details. The additions were made continuously and overflow from the reactor had the properties indicated. Polymer was recovered from the overflow as a crumb and had the properties given in the table.

Following the above procedure, an addition series of runs were made except that in individual runs the amount of redox catalyst system employed was increased to provide polymer of reduced intrinsic viscosity. Intrinsic viscosity and sulfonic acid end group content determined on the recovered polymer crumb form the basis for the plot in the accompanying drawing labelled "Prior Art Redox Systems".

Examples 1–4

Following the procedure of Comparative Example A, additional polymers were prepared in accordance with the present invention. All details, as regarding Comparative Example A, are also given in the table.

| | Comparative A | Example 1 | 2 | 3 | 4 |
|---|---|---|---|---|---|
| **Polymerization conditions** | | | | | |
| Monomer concentrations (%) | 30 | 35 | 35 | 35 | 35 |
| Redox system | | | | | |
| % $NaClO_3$ | 0.32 | 0.70 | – | – | 0.53 |
| % $K_2S_2O_8$ | – | – | 1.4 | 1.4 | – |
| % $NaHSO_3$ | 3.29 | 2.08 | 0.7 | 0.7 | 1.7 |
| % β-mercaptoethanol | – | 0.64 | 0.65 | 0.5 | 0.48 |
| % $CuSO_4 \cdot 5H_2O$ | – | 0.003 | 0.0015 | 0.0015 | 0.0025 |
| % $NaNO_3$ | 2.27 | 0.35 | – | – | 0.40 |
| Residence time (minutes) | 57 | 54 | 54 | 54 | 54 |
| Temperature (°C) | 50 | 55 | 60 | 60 | 60 |
| Reactor overflow (steady state) | | | | | |
| Conversion (%) | 80.0 | 85.8 | 84.0 | 86.5 | 83.6 |
| Intrinsic viscosity | 1.5 | 1.01 | 0.98 | 1.10 | 1.2 |
| pH | 2.4 | 2.1 | 2.5 | 2.5 | 2.2 |
| Polymer crumb | | | | | |
| % Methyl methacrylate | 10.7 | 10.4 | 10.7 | 10.6 | 10.8 |
| % Acrylonitrile | 89.3 | 89.6 | 89.3 | 89.4 | 89.2 |
| % –$SO_3H$ | 0.30 | 0.25 | 0.27 | 0.27 | 0.25 |

From the data given in the table, it can be seen that in accordance with the present invention, the molecular weight of the polymer can be varied widely while maintaining the sulfonic acid end group content at an essentially constant level.

Examples 5 and 6

The procedure of Example 1 is followed except that the methyl methacrylate is replaced by an equivalent amount of (5) methyl acrylate and (6) vinyl acetate, respectively. In each instance, similar results are achieved.

In the sole figure of drawing, the sulfonic acid end group content is plotted against the intrinsic viscosity of the acrylonitrile polymers produced by prior art use of redox systems and that of the present invention. The figure shows that polymer as obtained according to the instant invention has an essentially uniform sulfonic acid group content over a wide range of intrinsic viscosities while the prior art polymers have markedly increased sulfonic acid group content as the intrinsic viscosity weight is decreased.

**Claims**

1. A process for preparing an acrylonitrile polymer which comprises forming, at a temperature in the range of 40°C to 80°C, an aqueous suspension of a monomer content comprising at least 85 weight percent acrylonitrile, the balance being one or more ethylenically unsaturated monomers free of acid dyesites copolymerizable with acrylonitrile, said monomer content forming from 5 to 40 weight percent, based on the weight of said suspension, initiating polymerization by adding to said suspension effective amounts of a redox system comprising 4–20 parts per 1,000 parts of monomer, of an oxidizing agent selected from the group consisting of potassium persulfate, potassium chlorate, potassium perchlorate and potassium peroxide, their corresponding sodium and ammonium salts and hydrogen peroxide and a reducing agent, terminating said reaction at a monomer conversion in the range of 75% to 90% and recovering the polymer thus produced characterized in that the reducing agent comprises a mixture of a bisulfite and 0.4–0.8 percent by weight, based on monomers, of a water-soluble mercapto compound, the relative proportions of said bisulfite and said mercapto compound being such as to provide a sulfonic acid end group content in the resultant polymer in the range of 0.20 to 0.35 weight percent, based on the weight of the polymer and to provide a polymer having an intrinsic viscosity measured in dimethyl formamide at 40°C in the range of 0.5 to 1.4, and there is added with said redox system a copper activator.

2. The process of Claim 1 wherein said monomer content comprises acrylonitrile and methyl methacrylate.

3. The process of Claim 1 wherein said monomer content comprises acrylonitrile and methyl acrylate.

4. The process of Claim 1 wherein the relative proportions of said bisulfite and said mercapto compound provide a sulfonic acid end group content of 0.25 to 0.30 weight percent.

**Patentansprüche**

1. Verfahren zur Herstellung eines Acrylnitrilpolymerisats aus einer wässrigen Monomersuspension, enthaltend wenigstens 85 Gew.-% Acrylnitril und den Rest aus einem oder mehreren ethylenisch ungesättigten, mit Acrylnitril copolymerisierbaren Monomeren, die frei von Säurefarbstoffstellen sind, bei 40 bis 80°C, wobei der Monomergehalt 25 bis 40 Gew.-%, bezogen auf das Gewicht der Suspension, beträgt, Einleiten der Polymerisation, indem man zur Suspension eine wirksame Menge eines Redox-Systems hinzugibt, enthaltend 4 bis 20 Teile pro 1000 Teile der Monomeren eines Oxidationsmittels, ausgewählt aus der Gruppe bestehend aus Kaliumpersulfat, Kaliumchlorat, Kaliumperchlorat und Kaliumperoxid, den entsprechenden Natrium- und Ammoniumsalzen davon und Wasserstoffperoxid und eines Reduktionsmittels zur Beendigung der Umsetzung bei einer Monomerumsetzung im Bereich von 75 bis 90% und Rückgewinnung des so hergestellten Polymerisats, dadurch gekennzeichnet, dass man ein Reduktionsmittel verwendet, das ein Gemisch von Bisulfit und 0,4 bis 0,8 Gew.-%, bezogen auf die Monomeren, einer wasserlöslichen Mercaptoverbindung enthält, wobei das relative Verhältnis des Bisulfits zur Mercaptoverbindung so ausgewählt ist, dass ein Sulfonsäureendgruppengehalt im endgültigen Polymerisat im Bereich von 0,20 bis 0,35 Gew.-%, bezogen auf das Gewicht des Polymerisats, vorliegt und das Polymerisat eine Grenzviskosität, die in Dimethylformamid bei 40°C bestimmt wird, von 0,5 bis 1,4 aufweist und dass man mit dem Redox-System einen Kupferaktivator zugibt.

2. Verfahren nach Anspruch 1, dadurch gekennzeichnet, dass die Monomeren Acrylnitril und Methylmethacrylat enthalten.

3. Verfahren nach Anspruch 1, dadurch gekennzeichnet, dass die Monomeren Acrylnitril und Methylacrylat enthalten.

4. Verfahren nach Anspruch 1, dadurch gekennzeichnet, dass man das relative Verhältnis des Bisulfits und der Mercaptoverbindung so wählt, dass ein Sulfonsäureendgruppengehalt von 0,25 bis 0,30 Gew.-% erhalten wird.

## Revendications

1. Procédé de préparation d'un polymère à base d'acrylonitrile qui comprend la formation à une température comprise entre 40°C et 80°C, d'une suspension comprenant au moins 85 pourcent en poids d'acrylonitrile, le reste consistant en un ou plusieurs monomères à insaturation éthylénique exempts de sites de teinture acides et copolymèrisables avec l'acrylonitrile, la teneur en monomères représentant 25 à 40% en poids par rapport à la suspension, l'amorçage de la polymérisation par addition à cette suspension de quantités efficaces d'un système redox contenant:

- 4–20 parties en poids, pour 1000 parties de monomères, d'un agent oxydant choisi dans le groupe constitué par le persulfate de potassium, le chlorate de potassium, le perchlorate de potassium et le peroxyde de potassium, les sels de sodium et d'ammonium correspondants et le peroxyde d'hydrogène.
- et un réducteur
- l'arrêt de cette réaction quand le taux de conversion des monomères est compris entre 75 et 90% et
- la récupération du polymère ainsi produit, caractérisé en ce que le réducteur comprend un mélange d'un bisulfite et de 0,4–0,8 pourcent en poids, par rapport aux monomères, d'un composé hydrosoluble possédant un groupe mercapto, les proportions relatives du bisulfate et du composé à groupe mercapto étant telles que l'on obtienne une teneur en groupes terminaux acide sulfonique du polymère résultant comprise entre 0,20 et 0,35 pourcent en poids par rapport au poids du polymère et une viscosité intrinsèque, mesurée dans le diméthylformamide à 40°C du polymère comprise entre 0,5 et 1,4 et en ce que l'on ajoute avec le système redox un activateur contenant du cuivre.

2. Procédé selon la revendication 1 dans lequel les monomères comprennent de l'acrylonitrile et du méthacrylate de méthyle.

3. Procédé selon la revendication 1, dans lequel les monomères comprennent de l'acrylonitrile et du acrylate de méthyle.

4. Procédé suivant la revendication 1, dans lequel les proportions relatives du bisulfite et du composé à pompe mercapto fournissent une teneur en groupes terminaux acide sulfonique comprise entre 0,25 et 0,30% en poids.

PERCENT SULFONIC ACID END GROUPS